# EUROPÄISCHE PATENTSCHRIFT

(11) **EP 1 202 416 B1**
(45) Veröffentlichungstag und Bekanntmachung des Hinweises auf die Patenterteilung: **20.04.2005**
(21) Anmeldenummer: 01122777.4
(22) Anmeldetag: 21.09.2001
(51) Int. Cl.: H02B 1/38

(54) **Schrank, insbesondere Geräteschrank**
Cabinet, in particular installation cabinet
Armoire, notament pour appareillage

(30) Priorität: 27.10.2000 DE 10053433
(43) Veröffentlichungstag der Anmeldung: 02.05.2002
(73) Patentinhaber: Knürr AG, 94424 Arnstorf (DE)
(72) Erfinder: Knab, Josef, 94439 Rossbach (DE); Spateneder, Werner, 84347 Pfarrkirchen (DE); Gramelsberger, Stefan, 94428 Eichendorf (DE); Schneiderbauer, Siegfried, 94439 Rossbach (DE); Prinz, Alexander, 84389 Postmünster (DE)
(74) Vertreter: Heim, Hans-Karl, Dipl.-Ing.

(56) Entgegenhaltungen:
- DE-U- 29 904 992
- US-A- 5 806 946

## Beschreibung

Die Erfindung betrifft einen Schrank, insbesondere einen Geräteschrank für elektrische und elektronische Bauteile und Geräte, gemäß dem Oberbegriff des Anspruchs 1.

Aus der DE 297 11 262.7 U1 ist ein Geräteschrank mit Seitenteilen bekannt, welche wie eine frontseitige und rückseitige Tür als Verkleidungstüren ausgebildet und jeweils an einem vertikalen Tragprofil angelenkt sind. Die Tragprofile bilden die Eckbereiche der Verkleidung und sind zur Aufnahme eines selbsttragenden Gestells, welches einen Aufnahmeraum für Bauteile, Geräte usw. begrenzt, ausgebildet. Die Scharnierung erfolgt über die Tragprofile, welche eine Mittenöffnung aufweisen, die in endseitigen Bereichen zur Aufnahme eines Scharnierbolzens ausgebildet ist. Eine Scharnierbolzenaufnahme ist in einer oberen und bodenseitigen Abdeckung ausgebildet.

Aus der DE 299 04 992 U1 ist ein Geräteschrank bekannt, welcher aus vier senkrechten Stützen besteht, welche oben und unten über Horizontalholme miteinander verbunden sind. Jede Stütze ist mit einem schräg nach außen weisenden, kammartig ausgebildeten Schenkel versehen. Der Schrank kann vier Türen aufweisen, wobei dann jede Stütze oben und unten mit Scharniervorrichtungen versehen ist.

Ein gattungsbildender Schrank ist in der EP 0 789 985 B1 beschrieben. Quer-, Tiefen- und Vertikalprofile des Gestellrahmens sind aus einem Hohlprofil gefertigt, welches vielfach abgebogen ist und zwei identische Aufnahmen aufweist, welche durch einen etwa diagonalen Verbindungsbereich verbunden werden. In die zwei Aufnahmen greifen jeweils Steckansätze der Eckverbinder ein, welche etwa qua-dratisch ausgebildet sind. Aufgrund der diagonalen Verbindungsbereiche der Vertikalprofile stehen die Eckverbinder über und sind zur rechts- oder linksseitigen Anlenkung und entsprechenden Verriegelung der Fronttür mit einer Scharnierbolzenaufnahme bzw. Riegelbolzenaufnahme versehen. Die Scharnierbolzen bzw. der oder die Riegelbolzen sind in der Fronttür geführt. Die Seitenwände und die Rückwand sowie ein Deck- und Bodenblech werden mit den Eckverbindern fest verschraubt. Da die Eckverbinderteile die Außenkanten des Rahmengestells bilden, sind zurückgesetzte Anlageflächen für die fest verschraubten Verkleidungsteile erforderlich.

Außerdem sind die Fronttür und die fest verschraubten Seitenwände und Rückwand mit abgeschrägten Eckbereichen versehen, um eine einigermaßen dichte Anlage an den Eckverbindern zu erreichen. Neben diesen konstruktiven Nachteilen besteht ein weiterer Nachteil darin, dass ein Zugang zum Einbaubereich des gattungsbildenden Schaltschrankes und zu den darin angeordneten Geräten und Bauteilen nur über die Fronttür möglich ist.

Der Erfindung liegt die **Aufgabe** zugrunde, einen Schrank, insbesondere einen Geräteschrank zu schaffen, welcher bei einer besonders einfachen Konstruktion eine optimale Zugänglichkeit zu dem Einbaubereich und außerdem eine hohe Sicherheit vor einem unautorisierten Öffnen gewährleistet.

Erfindungsgemäß wird die Aufgabe durch die Merkmale des Anspruchs 1 gelöst. Zweckmäßige und vorteilhafte Ausgestaltungen sind in den Unteransprüchen enthalten und in der Figurenbeschreibung beschrieben.

Ein Grundgedanke der Erfindung ist darin zu sehen, eine allseitige Zugänglichkeit durch die Ausbildung der Seitenwände und der Rückwand als Verkleidungstüren zu erreichen. In einer, außerordentlich einfachen Konstruktion kann eine wahlweise linke und rechte Anlenkung der Fronttür, der Rückwand und der Seitenwände dadurch erreicht werden, dass die in die Eckverbinder integrierte Scharnierung durch die Ausbildung von zwei Schwenkachsen optimiert und ein unterer und der zugehörige obere Eckverbinder zur Aufnahme von jeweils zwei Scharnierbolzen ausgebildet sind.

Es ist vorgesehen, dass jeder Eckverbinder einen Ansatz an einer Außenseite aufweist und dass in diesem Ansatz zwei Scharnierbolzenaufnahmen, beispielsweise als komplementär zum Scharnierbolzen ausgebildete Bohrungen, mit einem gleichen Abstand zu einer Winkelhalbierenden des Eckbereichs, d.h. parallel zueinander, ausgebildet sind.

Das angestrebte Sicherheitskonzept wird dadurch erreicht, dass die oberen und unteren Scharnierbolzen nur vom Inneren des Geräteschrankes, d.h. nach dem Öffnen der Fronttür bzw. der Rückwand oder Rücktür, betätigbar sind und auf diese Weise die Seitenwände geöffnet werden können.

Es ist besonders vorteilhaft, dass die Scharnierseite der Fronttür und der Rückwand bzw. der rückseitigen Tür entsprechend den Erfordernissen gewählt werden kann und in einer besonders einfachen Weise bei Bedarf auch geändert werden kann.

Es ist vorteilhaft, dass die Scharnierbolzenaufnahmen im Ansatz der Eckverbinder auch zur Aufnahme eines Riegelbolzens bzw. einer Schließstange dienen können.

Zweckmäßigerweise sind beide Längsseiten der Seitenwände mit jeweils einem oberen und unteren Scharnierbolzen versehen. Diese Scharnierbolzen sind nur vom Innenraum her betätigbar, d.h. vertikal verstellbar, und ermöglichen eine wahlweise Anlenkung. Die Scharnierbolzen können somit an einer Längsseite zur Ausbildung einer Schwenkachse und auf der gegenüberliegenden Seite als Verriegelungsbolzen dienen. Wenn die Scharnier- bzw. Verriegelungsbolzen mit einer Handhabe, beispielsweise mit einem um etwa 90° abgebogenen Endbereich versehen sind, kann eine besonders einfache und leicht handhabbare Betätigung erfolgen.

Eine außerordentlich einfache Konstruktion sieht eine Scharnierbolzenbefestigung an der Innenseite der Seitenwände sowie der Fronttür und der Rückwand vor. Zweckmäßigerweise ist wenigstens eine Scharnierbolzenführung vorgesehen, und zur sicheren Halterung eines Scharnierbolzens in der jeweiligen Scharnierbolzenaufnahme eines Ansatzes eines Eckverbinders ist eine Federbeaufschlagung des Bolzens zweckmäßig. Das Entriegeln und Herausführen des Scharnierbolzens aus der Scharnierbolzenaufnahme des Eckverbinderansatzes erfolgt dann entgegen dem Federdruck.

In einer zweckmäßigen Ausbildung ist der Ansatz des Eckverbinders etwa zungenartig ausgebildet und reicht von einem oberen bzw. unteren Anlagebereich für ein Deckenteil bzw. Bodenteil mit einer Abschrägung bis etwa über die halbe Höhe des Eckverbinders. Der nach außen weisende Ansatz ist abgerundet ausgebildet. In Richtung der Verkleidungsteile bzw. deren Scharnierbolzen ist ein Schwenkbereich vorgesehen. Es ist besonders vorteilhaft, dass bei einer Anlenkung von zwei Verkleidungsteilen an einem oberen und unteren Eckverbinder ein Verkleidungsteil einen Öffnungswinkel bis etwa 180° erreichen kann. Das zweite Verkleidungsteil kann dann noch bis etwa 90° geöffnet werden.

Dem Ansatz gegenüberliegend und in den Innenraum gerichtet ist eine Befestigungslasche an dem Eckverbinder vorgesehen. Diese Befestigungslasche dient vorteilhafterweise der Auflage und Fixierung des Deckenteils bzw. Bodenteils. Wie der außenseitige Ansatz ist auch die Befestigungslasche auf der Winkelhalbierenden eines Eckbereiches angeordnet und vorteilhafterweise mit wenigstens einer Befestigungsöffnung zur Aufnahme einer Befestigungsschraube versehen.

Grundsätzlich können für den Gestellrahmen Profile mit einem quadratischen oder rechteckigen Querschnitt und Längsnuten zur Befestigung von Schienen, Profilen und anderen Einbauten verwendet werden. In einer besonders vorteilhaften Ausbildung besteht der Gestellrahmen des erfindungsgemäßen Schrankes aus Dreiecksprofilen und die Tiefen- und Querprofile bilden zusammen mit den Eckverbindern einen unteren und oberen Rahmen, welche durch Vertikalprofile miteinander verbunden werden.Es wird auf die deutschen Patentanmeldungen 100 21 719.2 und 100 21 718.4 verwiesen, in denen Gestellrahmen aus Dreiecksprofilen mit Eckverbindern beschrieben sind. Die Steckansätze der Eckverbinder können in einer besonderen Ausgestaltung jeweils zweiteilig und zur Aufnahme in nach außen gerichteten, spitzwinkligen Bereichen der Quer- und Tiefenprofile ausgebildet sein. Die Profile können direkt an einem oder zwei Steckansätzen der Eckverbinder oder indirekt mit Hilfe eines Klemmstückes fixiert werden.

Die Erfindung wird nachstehend anhand einer Zeichnung weiter erläutert; in dieser zeigen in einer stark schematisierten Darstellung
- Fig. 1: einen erfindungsgemäßen Geräteschrank;
- Fig. 2: eine Scharnierung einer Seitenwand des erfindungsgemäßen Schrankes nach Fig. 1;
- Fig. 3: eine Draufsicht auf einen Eckverbinder des Geräteschranks;
- Fig. 4: eine Ansicht nach Pfeil IV in Fig. 3;
- Fig. 5: eine Schnittansicht des Eckverbinders nach Linie V - V der Fig. 3;
- Fig. 6: einen Querschnitt durch ein Quer- oder Tiefenprofil des Rahmengestells und
- Fig. 7: einen Querschnitt durch ein Vertikalprofil des Rahmengestells.

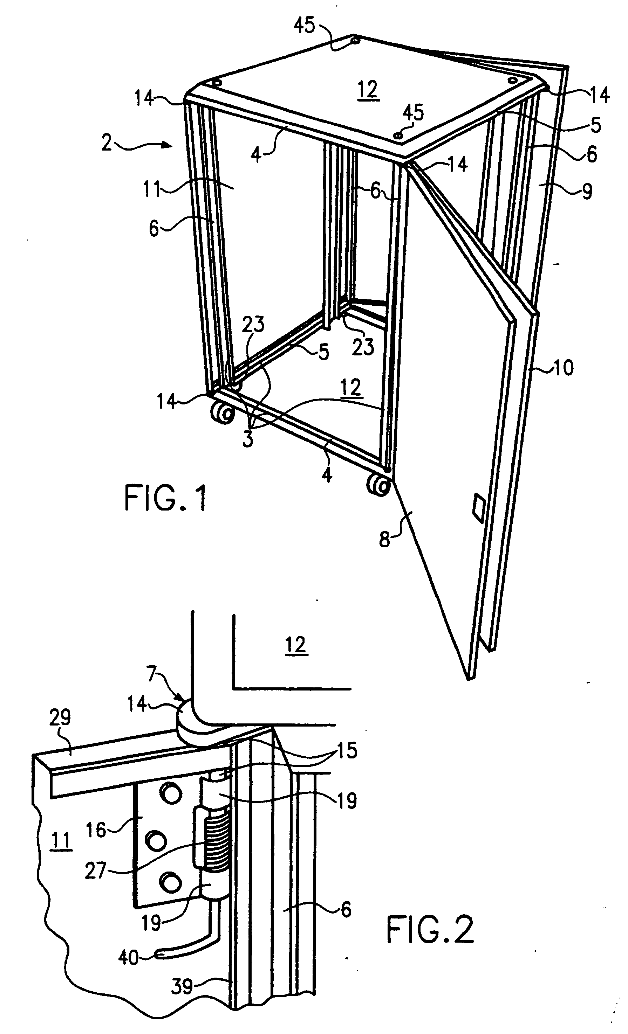

In Fig. 1 ist ein Schrank 2 gezeigt, welcher als Klein-Geräteschrank zur Aufnahme von elektrischen und elektronischen Bauteilen, Geräten und Einschüben (nicht dargestellt) vorgesehen ist.

Der Geräteschrank 2 weist ein Rahmengestell 3 mit Querprofilen 4, Tiefenprofilen 5 und Vertikalprofilen 6 auf, welche über Eckverbinder 7 (siehe Fig. 2 bis 5) miteinander verbunden werden. Zur Verkleidung des Schrankes 2 dienen eine Fronttür 8, eine Rückwand 9, zwei Seitenwände 10, 11 sowie ein Deckenteil 12 und ein Bodenteil 13.

In Fig. 1 sind die Fronttür 8, Rückwand 9 und die rechte Seitenwand 10 in Öffnungsstellung gezeigt, während die linke Seitenwand 11 in Verkleidungsposition dargestellt ist. Es wird deutlich, dass die Verkleidungsteile 8 bis 12 in Verkleidungsstellung über das Grundgestell 3 reichen und mit komplementär geformten Kantenbereichen nahezu aneinander anliegen.

Die Scharnierung der schwenkbar angelenkten Verkleidungsteile, d.h. der Seitenwände 10, 11 und der Rückwand 9 sowie der Fronttür 8, ist in die Eckverbinder 7 integriert. Zu diesem Zweck sind die Eckverbinder 7 mit einem Ansatz 14 versehen, welcher derart angeordnet und ausgebildet ist, dass jedes Verkleidungsteil 8 bis 11 am Umfang des Schrankes 2 wahlweise angelenkt und in eine Öffnungsstellung bis zu 180° gebracht werden kann. Auf diese Weise ist eine außerordentlich gute Zugänglichkeit zu dem Einbaubereich des Schrankes 2 und den daran angeordneten Geräten, Bauteilen usw. (nicht dargestellt) gewährleistet. Bei dem Schrank 2 nach Fig. 1 sind die Fronttür 8 und die rechte Seitenwand 10 durch in einen oberen und unteren Eckverbinder 7 integrierte Scharnierungen (nicht dargestellt) schwenkbar angeordnet, und es ist erkennbar, dass bei Öffnungsstellung der Seitenwand 10 mit einem Öffnungswinkel von etwa 180° die Fronttür 8 noch einen Öffnungswinkel von etwa 90° und umgekehrt aufweist.

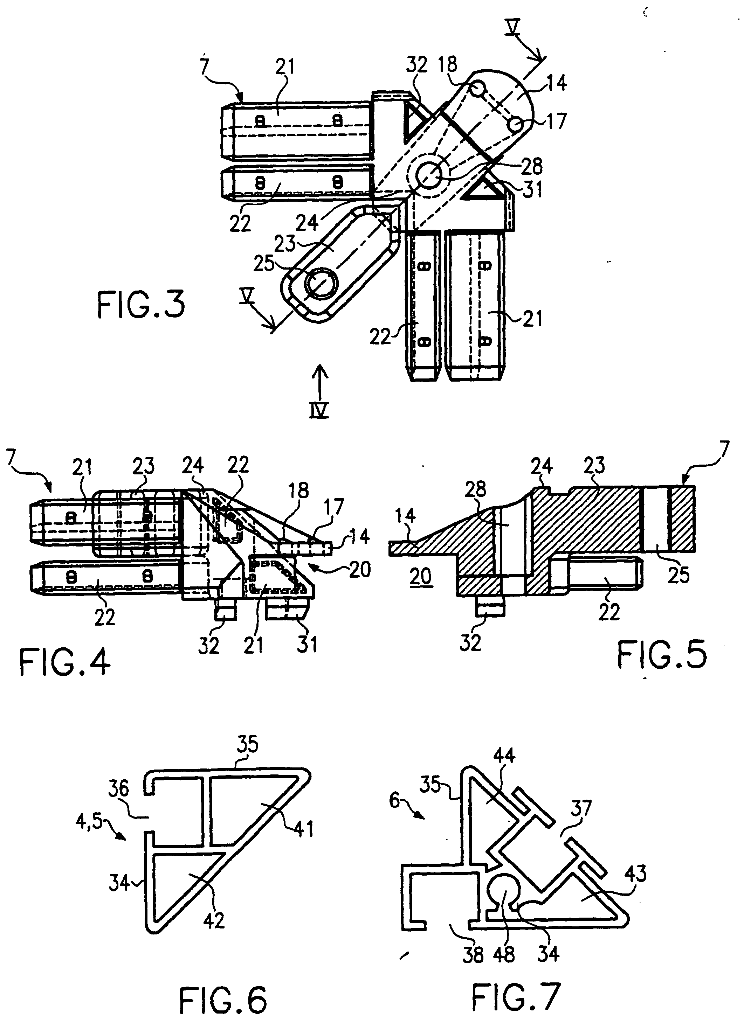

Die Ausbildung von zwei Schwenkachsen für zwei nebeneinander angeordnete Verkleidungsteile umfasst zwei Scharnierbolzenaufnahmen 17, 18 im Ansatz 14 eines oberen und unteren Eckverbinders 7 (siehe Fig. 3 und 4) sowie Scharnierbolzen 15, welche an innenseitigen Eckbereichen der Seitenwände 10, 11 der Fronttür 8 und der Rückwand 9 angeordnet sind.

In Fig. 2 ist die obere rückseitige Scharnierung der Seitenwand 11 dargestellt. Neben der Seitenwand 11 mit einem L-förmig abgebogenen horizontalen Kantenbereich 29 und einem rechtwinklig abgebogenen vertikalen Kantenbereich 39 sind ein Vertikalprofil 7 und der Ansatz 14 des oberen Eckverbinders 7, welcher nahezu vollständig von dem Deckenteil 12 abgedeckt wird, erkennbar. An der Innenseite der Seitenwand 11 und unmittelbar an die Kantenbereiche 29, 39 angrenzend ist eine Befestigungsplatte 16 für einen Scharnierbolzen 15 befestigt. Der Scharnierbolzen 15 wird in einer unteren und oberen Scharnierbolzenführung 19 der Befestigungsplatte 16 geführt und in Betriebsstellung durch eine Druckfeder 27 gehalten. Der Scharnierbolzen 15 ist mit einer Handhabe 40 versehen und kann entgegen dem Federdruck, hier: nach unten, verstellt werden, so dass ein Eingriff in eine der zwei Scharnierbolzenaufnahmen 17, 18 des Eckverbinderansatzes 14 nicht mehr gegeben ist. Wenn der untere und obere Scharnierbolzen 15 der Seitenwand 11 gleichzeitig zurückgezogen werden, kann die Seitenwand 11 um eine frontseitige Schwenkachse, welche analog zu der in Fig. 2 gezeigten Scharnierung gebildet ist, geöffnet werden. Von besonderem Vorteil ist dabei die Tatsache, dass eine Betätigung der Scharnierbolzen 15 und somit ein Öffnen der Seitenwände 10, 11 nur bei geöffneter Fronttür 8 oder Rückwand 9 erfolgen kann. Ein unautorisiertes Öffnen von außen ist somit wirkungsvoll verhindert.

Die Ausbildung eines Eckverbinders, welcher in den Figuren 3 bis 5 gezeigt ist, entspricht den für den Gestellrahmen 3 verwendeten Quer- und Tiefenprofilen 4, 5 (siehe Fig. 6) und den Vertikalprofilen 6 (siehe Fig. 7). Der Eckverbinder 7 ist gemäß Fig. 3 in Draufsicht etwa rechtwinklig ausgebildet und mit jeweils zwei Steckansätzen 21, 22 zur Aufnahme eines Querprofils 4 und eines Tiefenprofils 5 ausgebildet. Die Steckansätze 21, 22 unterscheiden sich voneinander und sind zum Einstecken in Aufnahmebereiche 41, 42 der Querprofile 4 bzw. Tiefenprofile 5 (Fig. 6) ausgebildet. Die Aufnahme der Steckansätze 21, 22 eines Querprofiles 4 am deckenseitigen Gestellrahmen geht aus Fig. 4 hervor.

Der Ansatz 14 des oberen Eckverbinders 7 der Figuren 3 bis 5 ist diagonal bzw. in Verlängerung einer Winkelhalbierenden des Eckbereiches und nach außen gerichtet angeordnet und weist in einem gleichen Abstand zur Winkelhalbierenden die zwei Scharnierbolzenaufnahmen 17, 18 auf, welche die Anlenkung von zwei Verkleidungsteilen 8 bis 11 in einem Eckbereich des Schrankes 2 gewährleisten. Der Ansatz 14 ist zungen- oder auch dachartig ausgebildet und erstreckt sich von einem oberen Auflagebereich 24 schräg nach außen, wobei der Ansatz 14 etwa über die halbe Höhe des Eckverbinders 7 reicht (siehe Fig. 4 und 5). Unterhalb des Ansatzes 14 ist ein Schwenkbereich 20 für zwei Verkleidungsteile ausgebildet. Mittig weist der Eckverbinder 7 eine Bohrung 28 auf, welche der Aufnahme eines Befestigungselementes (nicht dargestellt) zur Verbindung eines Vertikalprofils 6 dient. Im Vertikalprofil 6 (Fig. 7) ist eine komplementäre Befestigungsbohrung 48 ausgebildet, welche mit der Bohrung 28 des Eckverbinders 7 in Befestigungsstellung des Vertikalprofils 6 fluchtet. Zur Arretierung des Vertikalprofils 6 am Eckverbinder 7 sind außerdem Steckelemente 31, 32 ausgebildet, welche in Aufnahmebereiche 43, 44 des Vertikalprofils 6 eingreifen.

Entgegengesetzt zum Ansatz 14 und nach innen gerichtet ist am Eckverbinder 7 außerdem eine Befestigungslasche 23, welche blockartig ausgebildet ist, vorgesehen. Die Befestigungslasche 23 bildet mit dem Anlagebereich 24 eine Ebene und dient der Auflage und Befestigung des Deckenteils 12 bzw. Bodenteils 13 (siehe auch Fig. 1). Für diesen Zweck ist eine Befestigungsöffnung 25 vorgesehen, in welche Befestigungselemente 45 (siehe Fig. 1) geführt und gesichert werden.

Für den Gestellrahmen 3 des Schrankes 2 gemäß Fig. 1 können Dreiecksprofile, welche in den Fig. 6 und 7 gezeigt sind, verwendet werden. Diese sind im Querschnitt als ein rechtwinkliges Dreieck ausgebildet, wobei die den rechten Winkel einschließenden Seitenflächen 34, 35 jeweils ins Innere des Geräteschrankes gerichtet sind. Die vertikal angeordnete Seitenfläche 34 der Quer- und Tiefenprofile 4, 5 ist mit einer Befestigungsnut 36 versehen.

Das Vertikalprofil 6 (Fig. 7) entspricht im Wesentlichen dem Profil nach Fig. 6. Zur Befestigung an einem oberen und unteren Eckverbinder 7 ist eine Befestigungsbohrung 48 in Längsrichtung vorgesehen. Außenseitig ist eine Nut 37 ausgebildet, welche insbesondere zur Aufnahme von Anbaukomponenten dient und auch zur Aufnahme von Dichtungen, beispielsweise Dichtschnüren, zur Ausbildung eines IP-dichten und/oder EMV-abgeschirmten Schrankes verwendet werden kann. Eine innenseitige Nut 38 wird durch zusätzliche Abkantungen im Bereich des rechten Winkels gebildet und kann wie die Nut 37 zur Aufnahme von Anbaukomponenten oder eines Dichtungsstrangs oder im Bereich der Fronttür oder der Rückwand bzw. Rücktür auch zur Aufnahme eines Schließhebels bzw. einer entsprechenden Vorrichtung (nicht dargestellt) dienen.

## Patentansprüche

1. Schrank, insbesondere Geräteschrank für elektrische und elektronische Bauteile und Geräte,
mit einem Rahmengestell (3) aus Querprofilen (4), Tiefenprofilen (5) und Vertikalprofilen (6), welche über Eckverbinder (7) miteinander verbunden sind, und
mit einer Fronttür (8), einer Rückwand (9), zwei Seitenwänden (10, 11), einem Deckenteil (12) und einem Bodenteil (13) zur Verkleidung des Rahmengestells (3), wobei die Fronttür (8) über eine Scharnierung angelenkt ist, welche einen unteren und oberen Scharnierbolzen (15) an der Fronttür (8) und eine Scharnierbolzenaufnahme (17) in dem jeweiligen oberen und unteren Eckverbinder (7) aufweist,
**dadurch gekennzeichnet,**
**dass** die Seitenwände (10, 11) und die Rückwand (9) wie die Fronttür (8) mit Scharnierbolzen (15) versehen und aus einer Verkleidungsstellung in eine Offenstellung mit Zugang zu den Geräten und Bauteilen verschwenkbar sind und
**dass** für eine wahlweise linke und rechte Anlenkung der Fronttür (8), der Rückwand (9) und der Seitenwände (11, 12) jeder Eckverbinder (7) mit zwei Scharnierbolzenaufnahmen (17, 18) mit parallelen Achsen versehen ist.

2. Schrank nach Anspruch 1,
**dadurch gekennzeichnet,**
**dass** jeder Eckverbinder (7) einen Ansatz (14) aufweist und die zwei Scharnierbolzenaufnahmen (17, 18) in dem Ansatz (14) ausgebildet sind.

3. Schrank nach Anspruch 1 oder 2,
**dadurch gekennzeichnet,**
**dass** die Scharnierbolzen (15) der Fronttür (8), Rückwand (9) und der Seitenwände (11, 12) jeweils an den Innenseiten angeordnet und wenigstens die Scharnierbolzen (15) der Seitenwände (11, 12) nur bei geöffneter Fronttür (8) oder Rückwand (9) betätigbar sind.

4. Schrank nach einem der vorhergehenden Ansprüche, **dadurch gekennzeichnet,**
**dass** die Scharnierbolzen (15) jeweils in einer Scharnierbolzenführung (19) geführt und federbeaufschlagt in der jeweiligen Scharnierbolzenaufnahme (17; 18) gehalten sind.

5. Schrank nach einem der vorhergehenden Ansprüche, **dadurch gekennzeichnet,**
**dass** wenigstens die Seitenwände (11, 12) an beiden Längsseiten jeweils einen oberen und unteren Scharnierbolzen (15) für eine wahlweise Anordnung der Scharnierung aufweisen und dass die Scharnierbolzen (15) der jeweils anderen Längsseite zum Verriegeln der Seitenwände (11, 12) in die Scharnierbolzenaufnahmen (17, 18) eingreifen und nur von innen entriegelbar sind.

6. Schrank nach einem der Ansprüche 2 bis 5,
**dadurch gekennzeichnet,**
**dass** der Ansatz (14) der Eckverbinder (7) zungenartig ausgebildet ist und scharnierbolzenseitig einen Schwenkbereich (20) für einen Öffnungswinkel bis ca. 180° einer der zwei angeordneten Verkleidungsteile (8, 9, 10, 11) aufweist.

7. Schrank nach einem der vorhergehenden Ansprüche,
**dadurch gekennzeichnet,**
**dass** die Eckverbinder (7) wenigstens zur Aufnahme eines Tiefenprofils (5) und eines Querprofils (4) mit jeweils wenigstens einem Steckansatz (21, 22) ausgebildet sind und dass die Vertikalprofile (6) direkt oder indirekt am Eckverbinder fixierbar sind.

8. Schrank nach einem der vorhergehenden Ansprüche,
**dadurch gekennzeichnet,**
**dass** die Querprofile (4), Tiefenprofile (5) und Vertikalprofile (6) Dreiecksprofile sind und dass die Steckeinsätze (21, 22) zur Aufnahme und Fixierung der Dreiecksprofile ausgebildet sind.

9. Schrank nach Anspruch 8,
**dadurch gekennzeichnet,**
**dass** zum Aufstecken eines dreieckigen Querprofils (4) und Tiefenprofils (5) jeweils zwei Steckansätze (21, 22) vorgesehen sind, dass die Steckansätze (21, 22) unterschiedlich ausgebildet sind und in nach außen gerichteten spitzwinkligen Bereichen der dreieckigen Querprofile (4) und Tiefenprofile (5) einsteckbar sind.

10. Schrank nach einem der vorhergehenden Ansprüche, **dadurch gekennzeichnet,**
**dass** die Eckverbinder (7) jeweils eine Befestigungslasche (23) zur Befestigung des Deckenteils (12) bzw. Bodenteils (13) aufweisen.

11. Schrank nach Anspruch 10,
**dadurch gekennzeichnet,**
**dass** die Befestigungslaschen (23) an den Eckverbindern (7) innenseitig angeordnet und horizontal ausgerichtet sind.

## Claims

1. Cabinet, particularly equipment cabinet for electrical and electronic components and equipment,
having a frame (3) formed from transverse profiles (4), depth profiles (5) and vertical profiles (6), which are interconnected by means of corner connectors (7), and
a front door (8), a rear wall (9), two side walls (10, 11),
a top part (12) and a bottom part (13) for covering the frame (3), the front door (8) being articulated by means of a hinge system, which has a lower and an upper hinge pin (15) on the front door (8) and a hinge pin receptacle (17) in the upper and lower corner connectors (7),
**characterized in that**
the side walls (10, 11) and rear wall (9), like the front door (8) are provided with hinge pins (15) and can be pivoted from a covering position into an open position with access to the equipment and components and
that for an as desired right-hand and left-hand articulation of the front door (8), rear wall (9) and side walls (10, 11) each corner connector (7) is provided with two hinge pin receptacles (17, 18) with parallel axes.

2. Cabinet according to claim 1,
**characterized in that**
each corner connector (7) has a shoulder (14) and the two hinge pin receptacles (17, 18) are formed in the shoulder (14).

3. Cabinet according to claim 1 or 2,
**characterized in that**
the hinge pins (15) of the front door (8), rear wall (9) and side walls (11, 12) are in each case located on the insides and at least the hinge pins (15) of the side walls (10, 11) can only be operated when the front door (8) or the rear wall (9) is open.

4. Cabinet according to one of the preceding claims,
**characterized in that**
the hinge pins (15) are in each case guided in a hinge pin guide (19) and are held under spring action in the particular hinge pin receptacle (17, 18).

5. Cabinet according to one of the preceding claims,
**characterized in that**
at least the side walls (10, 11) on both longitudinal sides have in each case an upper and a lower hinge pin (15) for placing the hinge system on a random side and
that the hinge pins (15) of the in each case other longitudinal side for the purpose of locking the side walls (10, 11) engage in the hinge pin receptacles (17, 18) and can only be unlocked from the inside.

6. Cabinet according to one of the claims 2 to 5,
**characterized in that**
the shoulder (14) of the corner connector (7) has a tongue-like construction and on the hinge pin side has a pivoting area (20) for an opening angle of up to approximately 180° of one of the two covering parts (8, 9, 10, 11).

7. Cabinet according to one of the preceding claims,
**characterized in that**
the corner connectors (7), at least for the reception of a depth profile (5) and a transverse profile (4), are in each case constructed with at least one plug-in lug (21, 22) and
that the vertical profile (6) can be directly or indirectly fixed to the corner connector.

8. Cabinet according to one of the preceding claims,
**characterized in that**
the transverse profiles (4), depth profiles (5) and vertical profiles (6) are triangular profiles and
that the plug-in lugs (21, 22) are constructed for receiving and fixing the triangular profiles.

9. Cabinet according to claim 8,
**characterized in that**
for mounting a triangular transverse profile (4) and depth profile (5) in each case two plug-in lugs (21, 22) are provided, said plug-in lugs (21, 22) having different constructions and being insertable into outwardly directed, acute-angled areas of the triangular transverse profiles (4) and depth profiles (5).

10. Cabinet according to one of the preceding claims,
**characterized in that**
the corner connectors (7) in each case have an attachment tab (23) for the attachment of the top part (12) or bottom part (13).

11. Cabinet according to claim 10,
**characterized in that**
the attachment tabs (23) are positioned internally and oriented horizontally on the corner connectors (7).

## Revendications

1. Armoire, notamment pour appareillage, destinée à des composants et appareils électriques et électroniques, comportant un châssis (3) constitué de profilés transversaux (4), de profilés de profondeur (5) et de profilés verticaux (6), qui sont reliés entre eux par l'intermédiaire d'éléments de liaison d'angle (7), et comportant une porte avant (8), une paroi arrière (9), deux parois latérales (10, 11), une partie de couverture (12) et une partie de fond (13) pour habiller le châssis (3), la porte avant (8) étant articulée via un système de charnière présentant un boulon de charnière inférieur et un boulon de charnière supérieur (15) au niveau de la porte avant (8) et un logement de boulon de charnière (17) dans les éléments de liaison d'angle (7) inférieur et supérieur respectifs,
**caractérisée en ce que**
les parois latérales (10, 11) et la paroi arrière (9) ainsi que la porte avant (8) sont pourvues de boulons de charnière (15) et peuvent pivoter hors d'une position d'habillage dans une position ouverte permettant l'accès aux appareils et aux composants, et pour une articulation au choix à droite ou à gauche de la porte avant (8), de la paroi arrière (9) et des parois latérales (10, 11), chaque élément de liaison d'angle est pourvu de deux logements de boulon de charnière (17, 18) ayant des axes parallèles.

2. Armoire selon la revendication 1,
**caractérisée en ce que**
chaque élément de liaison d'angle (7) présente un prolongement (14) et les deux logements de boulon de charnière (17, 18) sont configurés dans le prolongement (14).

3. Armoire selon la revendication 1 ou 2,
**caractérisée en ce que**
les boulons de charnière (15) de la porte avant (8), de la paroi arrière (9) et des parois latérales (11, 12) sont chacun disposés au niveau des côtés intérieurs, et au moins les boulons de charnière (15) des parois latérales (10, 11) ne peuvent être actionnés que lorsque la porte avant (8) ou la paroi arrière (9) est ouverte.

4. Armoire selon l'une quelconque des revendications précédentes, **caractérisée en ce que**
les boulons de charnière (15) sont chacun guidés dans un guide pour boulons de charnière (19) et sont maintenus par l'action d'un ressort dans le logement de boulon de charnière (17 ; 18) respectif.

5. Armoire selon l'une quelconque des revendications précédentes, **caractérisée en ce que**
au moins les parois latérales (10, 11) présentent au niveau des deux côtés longitudinaux chaque fois un boulon de charnière supérieur et un boulon de charnière inférieur (15) pour une disposition au choix du système de charnière, et les boulons de charnière (15) de chaque autre côté longitudinal pénètrent pour le verrouillage des parois latérales (10, 11) dans les logements de boulon de charnière (17, 18) et ne peuvent être déverrouillés que de l'intérieur.

6. Armoire selon l'une quelconque des revendications 2 à 5, **caractérisée en ce que**
le prolongement (14) de l'élément de liaison d'angle (7) est en forme de languette et présente du côté du boulon de charnière une zone de pivotement (20) pour un angle d'ouverture jusqu'à environ 180° de l'une des deux parties d'habillage (8, 9, 10, 11).

7. Armoire selon l'une quelconque des revendications précédentes, **caractérisée en ce que**
les éléments de liaison d'angle (7), au moins pour le logement d'un profilé de profondeur (5) et d'un profilé transversal (4), sont configurés chacun avec au moins une broche d'ancrage (21, 22), et les profilés verticaux (6) peuvent être fixés directement ou indirectement à l'élément de liaison d'angle.

8. Armoire selon l'une quelconque des revendications précédentes,
**caractérisée en ce que**
les profilés transversaux (4), les profilés de profondeur (5) et les profilés verticaux (6) sont des profilés triangulaires, et les broches d'ancrage (21, 22) sont configurées pour permettre le logement et la fixation des profilés triangulaires.

9. Armoire selon la revendication 8,
**caractérisée en ce qu'**
il est prévu pour la mise en place d'un profilé transversal (4) et d'un profilé de profondeur (5) triangulaires, chaque fois deux broches d'ancrage (21, 22), les broches d'ancrage (21, 22) sont configurées différemment et peuvent s'enficher dans des zones orientées à angle aigu vers l'extérieur des profilés transversaux (4) et des profilés de profondeur (5) triangulaires.

10. Armoire selon l'une quelconque des revendications précédentes,
**caractérisée en ce que**
les éléments de liaison d'angle (7) présentent chacun une patte de fixation (23) pour la fixation de la partie de couverture (12) ou de la partie de fond (13).

11. Armoire selon la revendication 10,
**caractérisée en ce que**
les pattes de fixation (23) sont disposées horizontalement à l'intérieur sur les éléments de liaison d'angle (7).
